# EUROPÄISCHE PATENTANMELDUNG

(11) **EP 3 683 476 A1**
(43) Veröffentlichungstag der Anmeldung: **22.07.2020**
(21) Anmeldenummer: 19152343.0
(22) Anmeldetag: 17.01.2019
(51) Int. Cl.: F16J 15/10, F16J 15/12

(54) **DICHTUNGSANORDNUNG UND KRAFTFAHRZEUG-BAUTEILANORDNUNG MIT DERARTIGER DICHTUNGSANORDNUNG**

(71) Anmelder: Rubbertec GmbH, 72622 Nürtingen (DE)
(72) Erfinder: Keber, Marjan, 72622 Nürtingen (DE); Zwisler, Christian, 72622 Nürtingen (DE)
(74) Vertreter: advotec.

(57) **Zusammenfassung**

Es wird eine Dichtungsanordnung vorgeschlagen, umfassend einen Dichtungskörper (32) mit einem Dichtungskopf (34) zur Anlage an einer ersten Dichtfläche eines ersten Bauteils (14) und einen Dichtungsfuß (36) zur Anlage an einer zweiten Dichtfläche eines zweiten Bauteils (12). Es ist ein Trägerkörper (18) vorgesehen, an dem der Dichtungskörper (32) fixiert ist und der mindestens eine Dichtungsnut (38, 40) für den Dichtungskörper (32) bildet.

## Beschreibung

Die Erfindung betrifft eine Dichtungsanordnung mit den Merkmalen des Oberbegriffs des Patentanspruchs 1 sowie eine Kraftfahrzeug-Bauteilanordnung mit einer derartigen Dichtungsanordnung.

Dichtungsanordnungen werden in vielfältiger Weise zur Abdichtung von Übergängen zwischen zwei Bauteilen eingesetzt. Beispielsweise werden bei Verbrennungsmotoren Dichtungsanordnungen eingesetzt, um eine Motorhaube dichtend an einem Motorblock zu befestigen. Hierbei ist es bisher üblich, eine umlaufende Elastomerdichtung einzusetzen, die in eine Dichtungsnut eingelegt ist, welche an der Unterseite der Motorhaube ausgebildet ist. Im montierten Zustand der Motorhaube an dem Motorblock ist der aus dem Elastomer bestehende Dichtungskörper in der Dichtungsnut verpresst, so dass die Dichtungsnut zumindest weitgehend von dem Dichtungskörper ausgefüllt ist. Die Form des umlaufenden Dichtungskörpers muss an die Dichtungsnut angepasst sein.

Der Erfindung liegt die Aufgabe zugrunde, eine gemäß der einleitend genannten Gattung ausgebildete Dichtungsanordnung vorzuschlagen, die ein hohes Dichtvermögen hat, und zwar ohne Ausbildung einer Dichtungsnut an den betreffenden, zu dichtenden Bauteilen.

Diese Aufgabe ist erfindungsgemäß durch die Dichtungsanordnung mit den Merkmalen des Patentanspruchs 1 gelöst.

Gemäß der Erfindung wird mithin eine Dichtungsanordnung, insbesondere eine Kraftfahrzeug-Dichtungsanordnung vorgeschlagen, die einen umlaufenden Dichtungskörper mit einem Dichtungskopf zur Anlage einer ersten Dichtfläche eines ersten Bauteils und einen Dichtungsfuß zur Anlage an einer zweiten Dichtfläche eines zweiten Bauteils umfasst. Zudem umfasst die Dichtungsanordnung einen Trägerkörper, an dem der Dichtungskörper fixiert ist und der mindestens eine Dichtungsnut für den Dichtungskörper bildet.

Bei der Dichtungsanordnung nach der Erfindung ist also die Dichtungsnut, die zum Erreichen einer hohen Dichtwirkung erforderlich ist, direkt an der Dichtungsanordnung durch den Trägerkörper ausgebildet. Im montierten Zustand, das heißt wenn das erste Bauteil mit dem zweiten Bauteil verbunden ist, ist der Dichtungskörper in der von dem Trägerkörper gebildeten Dichtungsnut verpresst, so dass die Dichtungsnut zumindest weitgehend von dem Dichtungskörper ausgefüllt ist. Der Dichtungskörper ist im unverbauten Zustand der Dichtungsanordnung ebenfalls in der Dichtungsnut angeordnet, wobei er dann vorzugsweise über den Dichtungskörper vorsteht. Zudem verhindert der Trägerkörper vorzugsweise ein Kippen des Dichtungskörpers. Eine zusätzliche Dichtungsnut an einem der Bauteile ist nicht erforderlich.

Die Dichtungsanordnung nach der Erfindung kann insbesondere im Motorbereich eingesetzt werden. Beispielsweise kann die Dichtungsanordnung nach der Erfindung zur Abdichtung einer Motorhaube gegenüber einem Motorblock, zur Abdichtung einer Ölwanne gegenüber einem Motorblock oder auch zur Abdichtung eines Luftfiltergehäuses dienen. Der Einsatz der Dichtungsanordnung in fahrzeugfernen Anwendungsgebieten ist aber ebenso denkbar.

Bei einer zweckmäßigen Ausführungsform der Dichtungsanordnung nach der Erfindung besteht der Dichtungskörper aus einer Weichkomponente und der Trägerkörper aus einer Hartkomponente. Der Trägerkörper gibt damit die Lage der Dichtungsanordnung an den Bauteilen vor.

Beispielsweise ist der Dichtungskörper aus mindestens einem Material gebildet, das aus der Materialgruppe ausgewählt ist, die Ethylen-Acrylat-Kautschuk (AEM), Polyacrylat-Kautschuk (ACM), Fluorkautschuk (FKM), Ethylen-Propylen-Dien-Kautschuk (EPDM) und Venyl-Methyl-Silikon (VMQ) umfasst.

Der Trägerkörper ist vorzugsweise ebenfalls aus einem Kunststoffwerkstoff gefertigt. Beispielsweise besteht der eingesetzte Kunststoff aus einem Material, das aus der Materialgruppe gewählt ist, die Polyamid (PA)-Kunststoffe umfasst. Denkbar ist es aber auch, dass der Trägerkörper aus einem metallischen Werkstoff gefertigt ist.

Wenn der Trägerkörper aus einem Kunststoffwerkstoff gebildet ist, kann die Dichtungsanordnung nach der Erfindung ein Zweikomponenten-Spritzgießteil darstellen, bei dem der Kunststoffwerkstoff aus einer ersten Materialkomponente und der Dichtungskörper aus einer zweiten Materialkomponente gebildet ist.

Bei einer bevorzugten Ausführungsform der Dichtungsanordnung nach der Erfindung umfasst der Trägerkörper zwei Seitenwände, die über eine Querwand verbunden sind, so dass eine erste Dichtungsnut für den Dichtungskopf und eine zweite Dichtungsnut für den Dichtungsfuß ausgebildet sind.

Um eine stabile Anformung des Dichtungskörpers an dem Trägerkörper zu gewährleisten, umfasst die Querwand vorzugsweise Ausnehmungen, die von dem Dichtungskörper durchgriffen sind. Damit ist eine Verankerung des Dichtungskörpers an dem Trägerkörper gewährleistet. Der Dichtungskörper ist so auch kippsicher in dem Trägerkörper angeordnet. Die Kippneigung kann insbesondere dadurch weiter reduziert werden, dass die Dichtungsvolumina in den Dichtungsnuten unsymmetrisch verteilt werden.

Die Seitenwände des Trägerkörpers können in Einbaulage, das heißt wenn das erste Bauteil an dem zweiten Bauteil befestigt ist, als Abstandshalter zwischen den beiden Dichtflächen dienen, die an den beiden Bauteilen ausgebildet sind.

Um eine Verpressung des Dichtungskörpers in der mindestens einen Dichtungsnut des Trägerkörpers zu gewährleisten, hat der Dichtungskörper bei einer bevorzugten Ausführungsform der Kraftfahrzeug-Dichtungsanordnung nach der Erfindung im unverpressten Zustand eine Höhe, die größer ist als diejenige der Seitenwände.

Des Weiteren haben die Seitenwände vorzugsweise einen Abstand voneinander, der größer ist als die Breite des Dichtungskörpers im unverpressten Zustand. Damit ist es möglich, dass der Dichtungskörper sich beim Verpressen in Querrichtung ausdehnen kann.

Um die Dichtungsanordnung in definierter Lage an den miteinander zu verbindenden Bauteilen zu positionieren, ist an dem Trägerkörper bei einer bevorzugten Ausführungsform der Dichtungsanordnung nach der Erfindung eine Halteeinrichtung zur Fixierung an einem der Bauteile ausgeformt.

Beispielsweise ist die Halteeinrichtung aus nasenartigen Vorsprüngen gebildet, die nach Art von Rastnasen ausgebildet sein können, welche in korrespondierende Rastausnehmungen eingreifen, die an einem der beiden Bauteile ausgebildet sind.

Alternativ kann die Halteeinrichtung auch aus einem Vorsprung mit einer Ausnehmung bzw. einem Loch gebildet sein, in den ein Verbindungselement eingreift, das mit einem der Bauteile verbunden ist und das aus dem Werkstoff des Dichtungskörpers gebildet sein kann.

Der Dichtungskörper und der Trägerkörper können umlaufend, d. h. in sich geschlossen ausgebildet sein, so dass die Dichtungsanordnung im weitesten Sinne eine Ringdichtung bildet.

Die Erfindung hat auch eine Kraftfahrzeug-Bauteilanordnung zum Gegenstand, die ein erstes Bauteil mit einer ersten Dichtfläche und ein zweites Bauteil mit einer zweiten Dichtfläche umfasst. Zwischen den beiden Dichtflächen ist eine Kraftfahrzeug-Dichtungsanordnung der vorstehend beschriebenen Art angeordnet. Die Kraftfahrzeug-Bauteilanordnung ist beispielsweise eine Motoranordnung eines Kraftfahrzeuges, wobei das erste Bauteil von einer Motorhaube, einer Ölwanne, einem Luftfiltergehäuse oder dergleichen gebildet sein kann. Das zweite Bauteil ist beispielsweise von einem Motorblock oder dergleichen gebildet.

Weitere Vorteile und vorteilhafte Ausgestaltungen des Gegenstandes der Erfindung sind der Beschreibung, der Zeichnung und den Patentansprüchen entnehmbar.

Ausführungsbeispiele einer Kraftfahrzeug-Bauteilanordnung nach der Erfindung sind in der Zeichnung schematisch vereinfacht dargestellt und werden in der nachfolgenden Beschreibung näher erläutert. Es zeigt:
- Figur 1: eine stark schematische perspektivische Draufsicht auf eine Bauteilanordnung nach der Erfindung in einem Vormontagezustand;
- Figur 2: eine mit Figur 1 vergleichbare Draufsicht auf die Kraftfahrzeug-Bauteilanordnung, jedoch in einer transparenten Darstellung der Bauteile;
- Figur 3: eine perspektivische Draufsicht auf eine Dichtungsanordnung der Kraftfahrzeug-Bauteilanordnung;
- Figur 4: einen perspektivischen Schnitt durch die Kraftfahrzeug-Bauteilanordnung entlang der Linie IV-IV in Figur 1, jedoch in einer transparenten Darstellung der Bauteile;
- Figur 5: einen perspektivischen Schnitt durch die Kraftfahrzeug-Bauteilanordnung im Bereich einer Halteeinrichtung;
- Figur 6: einen Schnitt durch die Dichtungsanordnung im nicht verbauten Zustand;
- Figur 7: einen Schnitt durch die Dichtungsanordnung im verbauten Zustand;
- Figur 8: eine perspektivische Draufsicht auf eine zweite Ausführungsform einer Bauteilanordnung in einer Vormontagestellung;
- Figur 9: eine perspektivische Draufsicht auf die Kraftfahrzeug-Bauteilanordnung nach Figur 8 in einem Vormontagezustand, jedoch in einer transparenten Darstellung der Bauteile;
- Figur 10: einen perspektivischen Schnitt durch die Kraftfahrzeug-Bauteilanordnung nach Figur 8 in dessen Montagestellung;
- Figur 11: einen Schnitt durch die Kraftfahrzeug-Bauteilanordnung nach Figur 8 im Bereich einer Dichtungsanordnung; und
- Figur 12: einen weiteren Schnitt durch die Kraftfahrzeug-Bauteilanordnung nach Figur 8 im Bereich der Dichtungsanordnung.

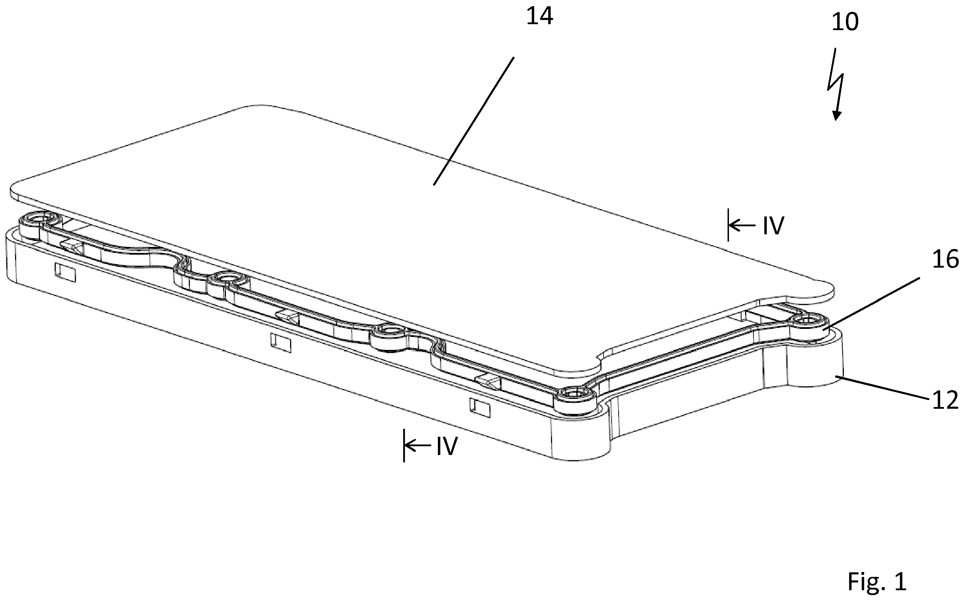

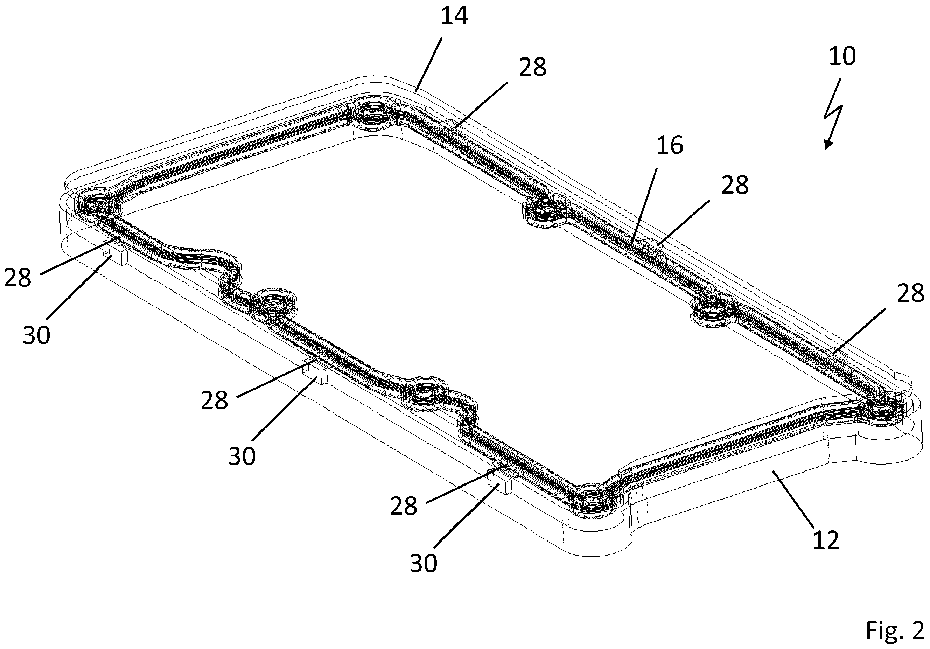

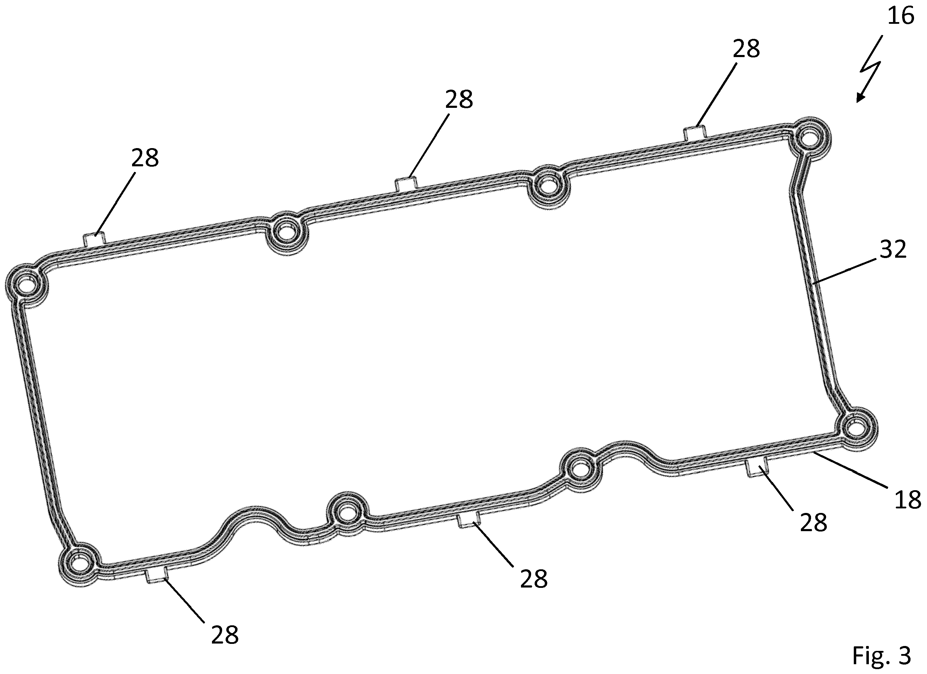

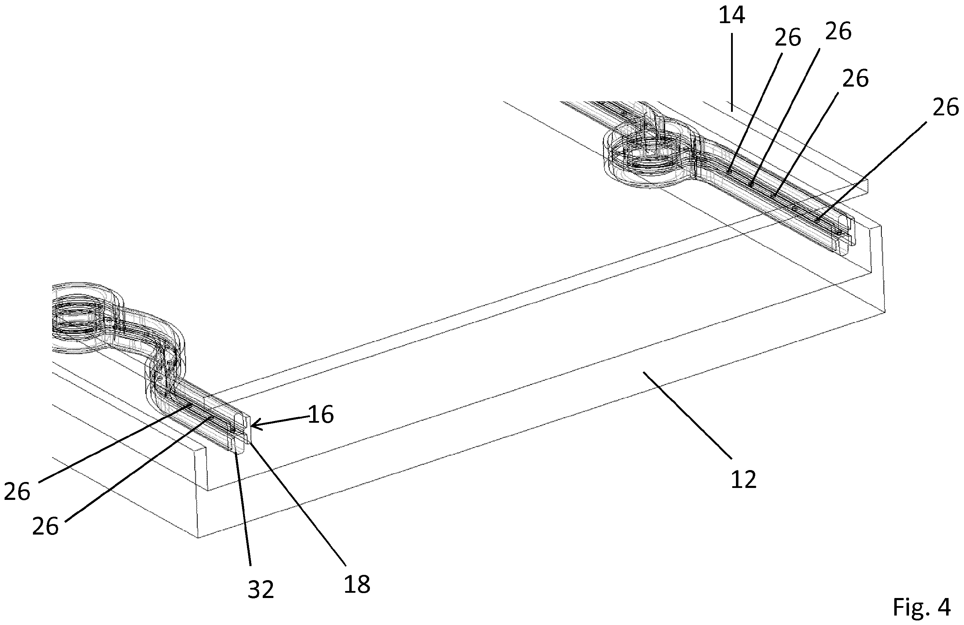

In den Figuren 1 bis 7 ist eine Kraftfahrzeug-Bauteilanordnung 10 eines Kraftfahrzeuges dargestellt. Die Kraftfahrzeug-Bauteilanordnung kann einen Verbrennungsmotor darstellen, der beispielsweise als Ottomotor ausgebildet ist und ein Bauteil 12 aufweist, das von einem Motorblock gebildet ist. Zudem weist die Kraftfahrzeug-Bauteilanordnung 10 ein Bauteil 14 auf, das eine Motorhaube bildet. Um den Bereich zwischen dem Bauteil 12 bzw. dem Motorblock und dem Bauteil 14 bzw. der Motorhaube abzudichten, ist zwischen diesen Bauteilen eine Dichtungsanordnung 16 angeordnet, die einen komplexen dreidimensionalen Verlauf hat und sich entlang der Ränder der beiden Bauteile 12 und 14 erstreckt und insbesondere auch Ringbereiche aufweist, die korrespondierende Abschnitte des Motorblocks umgreifen. Wie insbesondere den Figuren 2 und 3 zu entnehmen ist, ist die Dichtungsanordnung 16 umlaufend ausgebildet, das heißt in sich geschlossen.

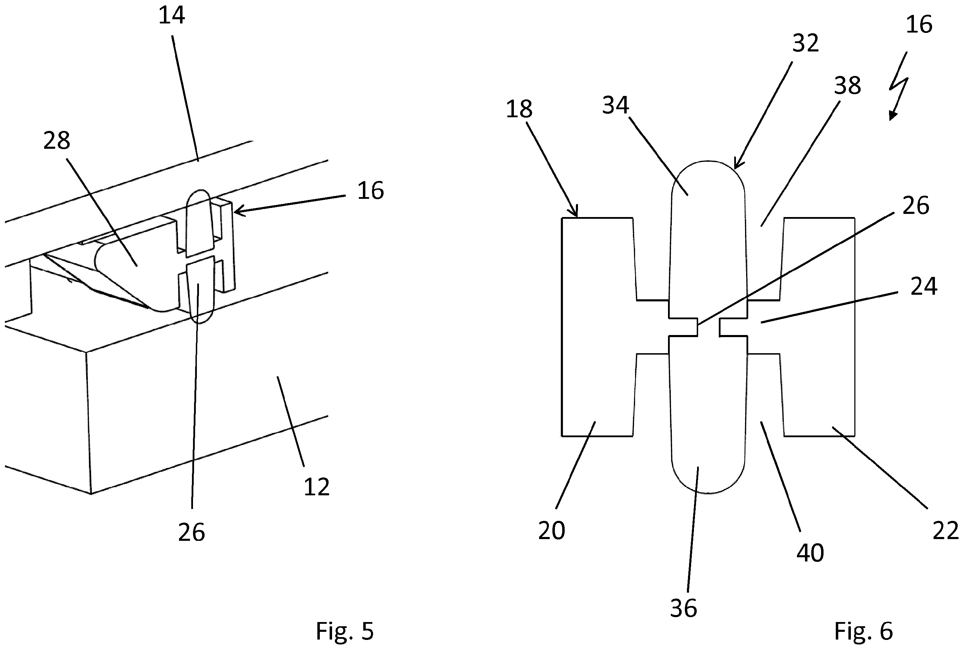

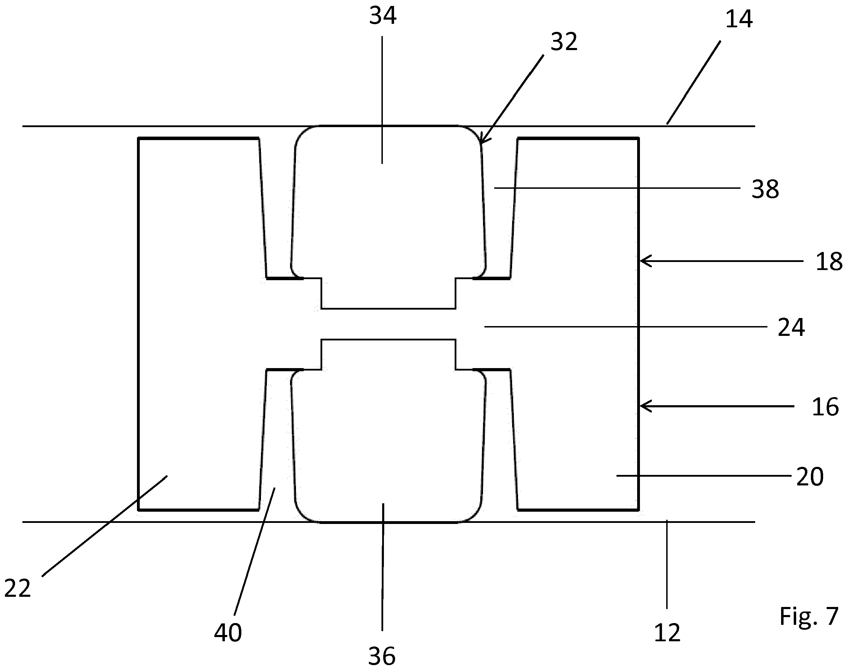

Die Dichtungsanordnung 16 umfasst über ihren gesamten Verlauf einen Trägerkörper 18, der aus einem Hartkunststoff gebildet ist und insbesondere aus einem Polyamid-Kunststoff besteht. Der Trägerkörper 18 umfasst, wie insbesondere den Figuren 6 und 7 zu entnehmen ist, zwei Seitenwände 20 und 22, die über eine Querwand 24 miteinander verbunden sind, die einen Quersteg bildet. Der Trägerkörper 18 hat damit einen im Wesentlichen H-förmigen Querschnitt. Über seine Erstreckung ist die Querwand 24 in regelmäßigen Abständen von Ausnehmungen 26 durchbrochen.

Um die Dichtungsanordnung 16 an der Kraftfahrzeug-Bauteilanordnung 10 zu positionieren, weist der Trägerkörper 18 an seiner Außenseite mehrere nasenartige Vorsprünge 28 auf, welche in der Montagestellung in korrespondierende Aussparungen 30 des Bauteils 12 eingreifen. Die nasenartigen Vorsprünge 28 bilden damit eine Halteeinrichtung für die Dichtungsanordnung 16.

Die Dichtungsanordnung 16 umfasst des Weiteren einen Dichtungskörper 32 aus einem elastomeren Werkstoff, wie Ethylen-Acrylat-Kautschuk, Polyacrylat-Kautschuk, FluorKautschuk oder Ethylen-Propylen-Dien-Kautschuk. Der Dichtungskörper 32 erstreckt sich mit seiner Längsmittelebene im Wesentlichen parallel zu den Seitenwänden 20 und 22 des Trägerkörpers 18 und weist einen Dichtungskopf 34 zur Anlage an einer eine Dichtfläche bildenden Unterseite des Bauteils 14 und einen Dichtungsfuß 36 zur Anlage an einer Dichtfläche des unteren Bauteils 12 auf. Der Dichtungskörper 32 durchgreift die Ausnehmungen 26, die in der Querwand 24 ausgebildet sind, und ist so an dem Trägerkörper 18 verankert.

Der Dichtungskörper 32 hat in dem in Figur 6 dargestellten, nicht verbauten Zustand eine Höhe, die größer ist als diejenige der Seitenwände 20 und 22. Beispielsweise hat der Dichtungskörper 32 eine Höhe zwischen 8 mm und 10 mm, wohingegen die Seitenwände 20 und 22 jeweils eine Höhe von etwa 5 mm bis 7 mm haben. Im vorliegenden Beispiel hat der Dichtungskörper 32 eine Höhe von 9,3 mm und die Seitenwände 20 und 22 haben jeweils eine Höhe von 6,1 mm. Die Querwand 24 hat eine Dicke von 1,5 mm. Der Dichtungskörper 32 hat zudem im Bereich der Querwand eine Breite von 2,2 mm, wobei der Dichtungskopf 34 und der Dichtungsfuß 36 jeweils in Richtung Dichtfläche schräg aufeinander zulaufen und im Bereich der Dichtfläche mit einem Krümmungsradius von 1 mm abgerundet sind. Die Seitenwände 20 und 22 des Trägerkörpers 18 laufen beidseits der Querwand 24 mit ihren Innenseiten mit einem Winkel von jeweils etwa 3° auseinander. Der Dichtungskopf 34 ist in einer von den Seitenwänden 20 und 22 und der Oberseite der Querwand 24 gebildeten oberen Dichtungsnut 38 aufgenommen. Der Dichtungsfuß 36 ist von einer unteren Dichtungsnut 40 aufgenommen, die seitlich von den Seitenwänden 20 und 22 und oben von der Querwand 24 begrenzt ist.

In dem in Figur 7 dargestellten Montagezustand ist der Dichtungskopf 34 in der oberen Dichtungsnut 38 verpresst, wohingegen der Dichtungsfuß 36 in der unteren Dichtungsnut 40 verpresst ist. Die Seitenwände 20 und 22 bilden hierbei einen Abstandshalter, der den minimalen Abstand zwischen dem unteren Bauteil 12 und dem oberen Bauteil 14 vorgibt.

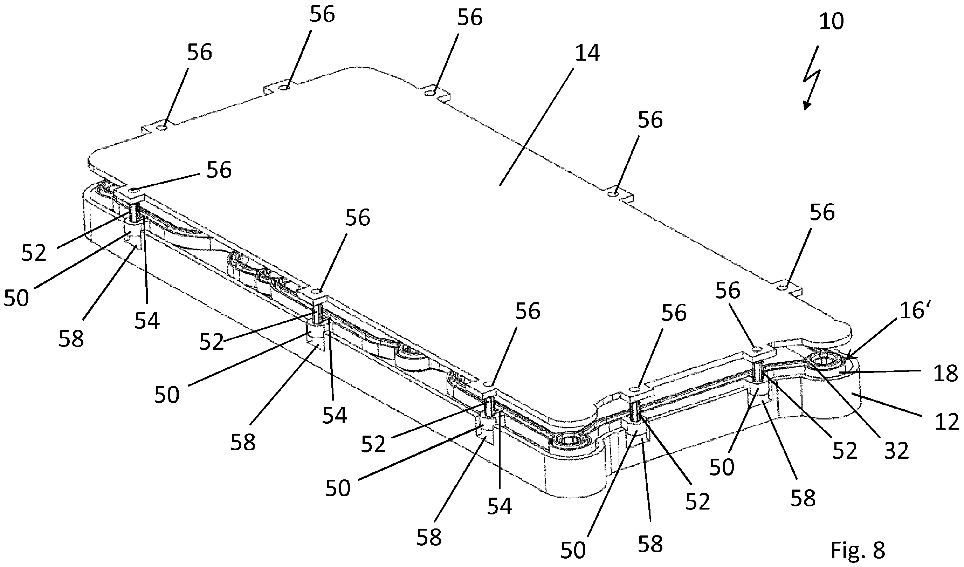

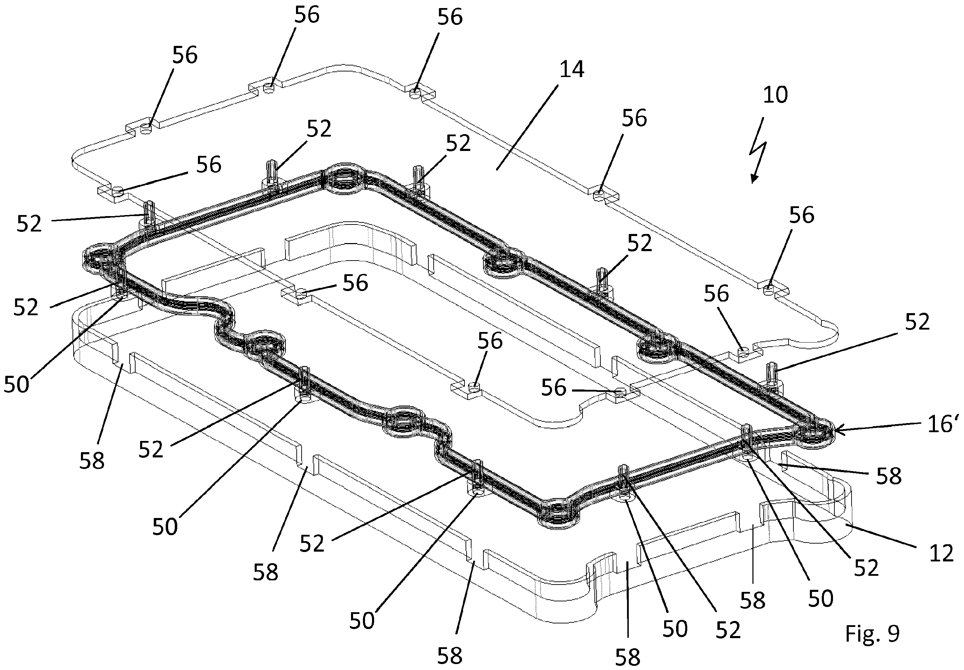

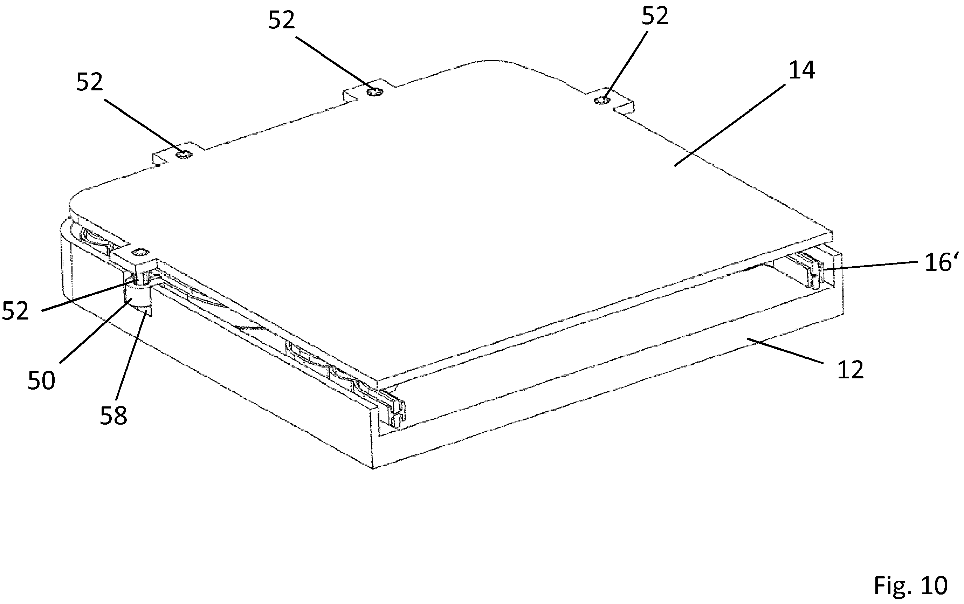

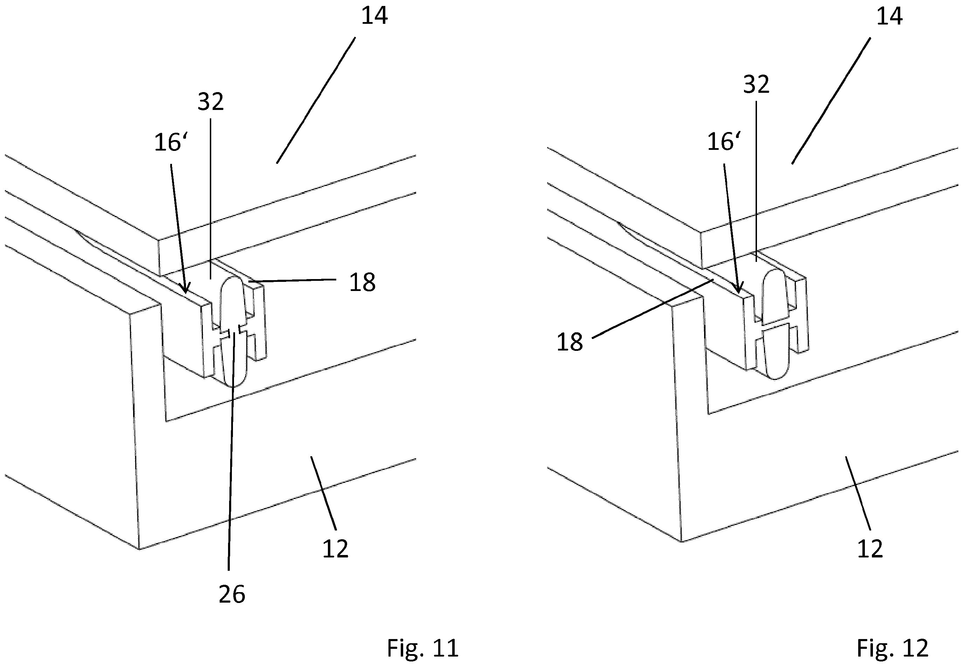

In den Figuren 8 bis 12 ist eine alternative Ausführungsform einer Kraftfahrzeug-Bauteilanordnung 10' dargestellt, die weitgehend derjenigen nach den Figuren 1 bis 7 entspricht und sich von dieser durch die Fixierung einer Dichtungsanordnung 16' unterscheidet.

Die Dichtungsanordnung 16' entspricht grundsätzlich der anhand der Figuren 1 bis 7 beschriebenen Dichtungsanordnung. Jedoch weist die Dichtungsanordnung 16' zur Fixierung keine nasenartigen Vorsprünge auf. Vielmehr sind an der Außenseite des Trägerkörpers 18 über den Umfang verteilt mehrere Vorsprünge 50 ausgebildet, die jeweils mit einem zylindrischen Loch versehen sind, in dem ein zylindrischer Zapfen 52 angeordnet ist, der aus dem Material des Dichtungskörpers 32 gebildet ist und über einen Steg 54 mit diesem verbunden ist. Die Herstellung der Zapfen 52 erfolgt damit zusammen mit der Herstellung bzw. dem Anspritzen des Dichtungskörpers 32 an den Trägerkörper 18.

Die Zapfen 52, die nach oben weisen, greifen jeweils in ein Loch 56 ein, das im Bereich einer seitlich vorstehenden Lasche des oberen Bauteils 14 ausgebildet ist. Damit kann die Dichtungsanordnung 16' durch Verpressen der Zapfen 52 in den Löchern 56 in einem Vormontageschritt an dem oberen Bauteil 14 fixiert werden. In der Montagestellung greifen die Vorsprünge 50 des Trägerkörpers 18 jeweils in seitliche Aussparungen 58 des unteren Bauteils 12 ein.

Im Übrigen entspricht die Kraftfahrzeug-Bauteilanordnung 10' derjenigen nach den Figuren 1 bis 7.

### Bezugszeichenliste

- 10, 10': Kraftfahrzeug-Bauteilanordnung
- 12: Bauteil
- 14: Bauteil
- 16, 16': Dichtungsanordnung
- 18: Trägerkörper
- 20: Seitenwand
- 22: Seitenwand
- 24: Querwand
- 26: Ausnehmungen
- 28: Vorsprünge
- 30: Aussparung
- 32: Dichtungskörper
- 34: Dichtungskopf
- 36: Dichtungsfuß
- 38: Dichtungsnut
- 40: Dichtungsnut
- 50: Vorsprung
- 52: Zapfen
- 54: Steg
- 56: Loch
- 58: Aussparung

## Patentansprüche

1. Dichtungsanordnung, insbesondere Kraftfahrzeug-Dichtungsanordnung, umfassend einen Dichtungskörper (32) mit einem Dichtungskopf (34) zur Anlage an einer ersten Dichtfläche eines ersten Bauteils (14) und einen Dichtungsfuß (36) zur Anlage an einer zweiten Dichtfläche eines zweiten Bauteils (12), **gekennzeichnet durch** einen Trägerkörper (18), an dem der Dichtungskörper (32) fixiert ist und der mindestens eine Dichtungsnut (38, 40) für den Dichtungskörper (32) bildet.

2. Dichtungsanordnung nach Anspruch 1, **dadurch gekennzeichnet, dass** der Dichtungskörper (32) aus einer Weichkomponente und der Trägerkörper (18) aus einer Hartkomponente gebildet ist.

3. Dichtungsanordnung nach Anspruch 1 oder 2, **dadurch gekennzeichnet, dass** der Dichtungskörper (12) aus Ethylen-Acrylat-Kautschuk (AEM), Polyacrylat-Kautschuk (ACM), Fluorkautschuk (FKM), Venyl-Methyl-Silikon (VMQ) und/oder Ethylen-Propylen-Dien-Kautschuk (EPDM) gebildet ist.

4. Dichtungsanordnung nach einem der Ansprüche 1 bis 3, **dadurch gekennzeichnet, dass** der Trägerkörper (18) aus einem Kunststoffwerkstoff gebildet ist, der ein Polyamid (PA) umfasst.

5. Dichtungsanordnung nach einem der Ansprüche 1 bis 4, **dadurch gekennzeichnet, dass** der Trägerkörper (18) zwei Seitenwände (20, 22) umfasst, die über eine Querwand (24) verbunden sind, so dass eine erste Dichtungsnut (38) für den Dichtungskopf (34) und eine zweite Dichtungsnut (40) für den Dichtungsfuß (36) ausgebildet sind.

6. Dichtungsanordnung nach Anspruch 5, **dadurch gekennzeichnet, dass** die Querwand (24) Ausnehmungen (26) umfasst, die von dem Dichtungskörper (32) durchgriffen sind.

7. Dichtungsanordnung nach Anspruch 5 oder 6, **dadurch gekennzeichnet, dass** die Seitenwände (20, 22) als Abstandshalter zwischen den beiden Dichtflächen dienen.

8. Dichtungsanordnung nach einem der Ansprüche 5 bis 7, **dadurch gekennzeichnet, dass** der Dichtungskörper (32) eine Höhe hat, die größer ist als diejenige der Seitenwände (20, 22).

9. Dichtungsanordnung nach einem der Ansprüche 5 bis 8, **dadurch gekennzeichnet, dass** die Seitenwände (20, 22) einen Abstand voneinander haben, der größer ist als die Breite des Dichtungskörpers (32).

10. Dichtungsanordnung nach einem der Ansprüche 1 bis 9, **dadurch gekennzeichnet, dass** an dem Trägerkörper (18) eine Halteeinrichtung zur Fixierung an einem der Bauteile ausgeformt ist.

11. Dichtungsanordnung nach Anspruch 10, **dadurch gekennzeichnet, dass** die Halteeinrichtung aus nasenartigen Vorsprüngen (28) gebildet ist.

12. Dichtungsanordnung nach einem der Ansprüche 1 bis 11, **dadurch gekennzeichnet, dass** der Dichtungskörper (32) und der Trägerkörper (18) umlaufend ausgebildet sind.

13. Bauteilanordnung, umfassend ein erstes Bauteil (14) mit einer ersten Dichtfläche und ein zweites Bauteil (12) mit einer zweiten Dichtfläche, **gekennzeichnet durch** eine Dichtungsanordnung (16, 16') nach einem der Ansprüche 1 bis 12, die zwischen den beiden Dichtflächen angeordnet ist.
